# EUROPÄISCHE PATENTSCHRIFT

(11) **EP 3 266 084 B1**
(45) Veröffentlichungstag und Bekanntmachung des Hinweises auf die Patenterteilung: **23.10.2019**
(21) Anmeldenummer: 16711768.8
(22) Anmeldetag: 15.02.2016
(51) Int. Cl.: H02G 15/00

(54) **KABELABDICHTUNG**
CABLE SEAL
GARNITURE D'ÉTANCHÉITÉ DE CÂBLE

(30) Priorität: 06.03.2015 DE 102015103274
(43) Veröffentlichungstag der Anmeldung: 10.01.2018
(73) Patentinhaber: HARTING Electronics GmbH, 32339 Espelkamp (DE)
(72) Erfinder: LÜCKEMEIER, Martin, 31603 Diepenau (DE)
(86) Internationale Anmeldenummer: PCT/DE2016/100069
(87) Internationale Veröffentlichungsnummer: WO 2016/141921

(56) Entgegenhaltungen:
- EP-A1- 0 908 971
- EP-A2- 0 264 203
- DE-A1- 4 415 119
- US-A- 3 071 386
- US-A- 3 258 520
- US-A- 4 903 972

## Beschreibung

Die Erfindung geht aus von einer Dichtung für Kabel und Schläuche nach dem Oberbegriff des unabhängigen Anspruchs 1.

Derartige Dichtungen werden im Bereich von Durchführungen benötigt, um Kabel oder Schläuche die in ein Gehäuse geführt werden gegen Umwelteinflüsse wie zum Beispiel Staub, Dreck und Feuchtigkeit abzudichten. Diese Umwelteinflüsse sollen nicht im Bereich der Durchführung in das Gehäuse eindringen.

### Stand der Technik

Aus dem Stand der Technik sind eine Vielzahl von Dichtungen für Kabel und Schläuche bekannt. Dabei werden Kabel meist durch Dichtringe, Dichtscheiben oder speziell ausgebildete Dichtungen abgedichtet.

Aus der DE 87 00 327 U1 ist eine stopfbuchsenartige Anordnung zur Abdichtung von Kabeldurchführungen für kunststoffisolierte Hochspannungskabel bekannt. Dabei weist die Anordnung einen mehrteiligen Dichtungskörper, ein Stopfbuchsenbauteil und ein Drückstück mit Schraubring auf.

In der US 3 258 520 A ist eine Vorrichtung offenbart, die als Durchfüh-rung für elektrisches Zubehör dient und zwei Dichtungen aufweist, die zueinander beabstandet angeordnet sind.

Aus der Druckschrift DE 44 15 119 A1 ist eine Dichtung mit einem Gleitrig und einem Gegenring bekannt. Der Gleitring und der Gegenring sind über ihre Dichtflächen vorgespannt. Sie sind federnd durch eine Feder an einem Gegenlager in axialer Richtung abgestützt. Das Gegenlager ist in einem Stellring fest mit dem Gegenring gekoppelt. Sie umgeben drehfest eine abzudichtende Welle. Die Ringe sind gegeneinander und gegen die Welle durch Elastomerdichtungen abgedichtet. Der Gleitring ist über einen elastomeren Dichtring drehfest mit einem den Gegenlager bildenden Gehäuseteil gekoppelt. Die abgedichteten Kammern auf jeder Seite der Gleitringdichtung können unter hohen Druck gesetzt werden.

Die Druckschrift US 3 071 386 A offenbart eine Vorrichtung, aufweisend Kolben- und Zylinderteile mit zylindrischen Flächen, die in einem im wesentlichen konstanten Abstand zueinander beabstandet sind, und so einen Hohlraum bilden. Weiterhin besitzt die Vorrichtung Haltemittel, die auf dem Zylinderteil abgestützt sind und sich in den Freiraum erstrecken. In dem Hohlraum ist ein weicher verformbarer O-Ring angeordnet.

Die Druckschrift EP 264 203 A2 zeigt eine bewegliche O-Ring-Verschlussanordnung für einen Druckbehälter 1, die besonders einfach montierbar und demontierbar ist.

Die Druckschrift US 4 903 972 A offenbart eine Abdichtungsvorrichtung für ein Gehäuse, das ein expandierbares Fluid, insbesondere für Hochspannungsverbinder, enthält. Durch die Verwendung einer versetzbar in einer ringförmigen Ausnehmung geklemmten O-Ring-Dichtung werden Volumenänderungen des Fluids aufgenommen. Die Abdichtungsvorrichtung gewährleistet die Fluiddichtigkeit über einen breiten Temperaturbereich und bietet weiterhin eine Sicherheitsfunktion.

Die Druckschrift EP 908 971 A1 offenbart einen Dichtungsring für einen Hochspannungsverbinder. Dieser besitzt einen ringförmigen Kern aus geschlossenzelligem Elastomerschaum, der vollständig mit einer Elastomerabdeckung beschichtet ist. Diese Elastomerabdeckung ist auch bei starken Temperaturschwankungen gegenüber einer im Verbinder verwendeten elektrischen Isolier- und Kühlflüssigkeit widerstandsfähig.

Je nach Durchführung und Kabel sind die Dichtungen dafür sehr aufwändig gestaltet und aufwändig sowie teuer zu produzieren.

### Aufgabenstellung

Die Aufgabe der Erfindung besteht darin, eine Abdichtung von Kabel und Schläuchen zu ermöglichen, wobei möglichst standardisierte Dichtelemente Verwendung finden sollen um zusätzliche Kosten gering zu halten.

Die Aufgabe wird durch die Merkmale des unabhängigen Anspruchs 1 gelöst.

Vorteilhafte Ausgestaltungen der Erfindung sind in den Unteransprüchen angegeben.

Bei der Erfindung handelt es sich um eine Dichtung für Kabel und Schläuche, die in ein Gehäuse eingeführt und an diesem abgedichtet werden sollen. Die Dichtung wird aus einer Durchführung am Gehäuse und einem Druckelement gebildet. Das Druckelement kann auf das Gehäuse am Ende der Durchführung aufgeschraubt oder in das Gehäuse eingeschraubt werden.

Dafür sind Gehäuse und Druckelement mit korrespondierenden Gewinden ausgestattet. Das Druckelement ist vorteilhaft als Ring ausgebildet, wobei es über eine mittige Öffnung verfügt durch welche ein Kabel oder Schlauch durch das Druckelement geführt werden kann. Bei ein- oder aufgeschraubtem Druckelement sind die Öffnung des Druckelements und die Durchführung fluchtend zueinander ausgerichtet, dass ein Kabel oder Schlauch durch beide in das Gehäuse geführt werden kann.

Am Ende der Durchführung ist eine ringförmige, erste Druckfläche vorgesehen. Die erste Druckfläche ist dem Druckelement zugewandt. Am Druckelement ist eine ebenfalls ringförmige, zweite Druckfläche vorgesehen. Die zweite Druckfläche ist dem Gehäuse und der ersten Druckfläche zugewandt. Wodurch sich zwischen der ersten Druckfläche und der zweiten Druckfläche ein Druckbereich bildet. Der Druckbereich ist entsprechend der Auf-/Einschraubtiefe des Druckelements auf dem Gehäuse in der Größe variabel.

Im Druckbereich sind zwei Dichtringe, ein erster Dichtring und ein zweiter Dichtring, sogenannte O-Ringe angeordnet. Der erste Dichtring ist dabei im Durchmesser kleiner dimensioniert als der zweite Dichtring. Dabei ist der Innendurchmesser des ersten Dichtrings jedoch nicht größer als der Außendurchmesser des zweiten Dichtrings. In einer vorteilhaften Ausführungsform ist der zweite Dichtring vom Innendurchmesser kleiner bemessen als die Durchführung des Gehäuses. Der Außendurchmesser des zweiten Dichtrings ist jedoch größer als die Durchführung bemessen.

Zweckmäßig ist der zweite Dichtring so bemessen, dass er mit leichter Spannung auf einem Kabel oder Schlauch sitzt, welcher durch die Durchführung in das Gehäuse eingeführt ist. Der erste Dichtring sitzt mit leichter Spannung in dem Druckbereich zwischen der ersten Druckfläche und der zweiten Druckfläche.

Durch weiteres Auf-/Einschrauben des Druckelements auf das Gehäuse werden die Druckflächen näher zueinander gebracht und der Druckbereich eingeengt. Der erste Dichtring und der zweite Dichtring werden über die erste Druckfläche und die zweite Druckfläche aneinander gedrückt. Durch die unterschiedlichen Durchmesser der Dichtringe werden diese über ihre Außenfläche voneinander abgelenkt. Dies führt zu einer radialen Dehnung des ersten Dichtrings und einer radialen Stauchung des zweiten Dichtrings.

Durch die Stauchung des zweiten Dichtrings und die Dehnung des ersten Dichtrings dichten diese zueinander, sowie zu den Druckflächen, dem Kabel/Schlauch und der Durchführung umweltdicht ab.

In einer speziellen Ausführungsform ist ein oder beide der Druckflächen nicht parallel zueinander, sondern mit einem Winkel zueinander angeordnet. Dadurch kann eine bessere Anpressung des ersten Dichtrings an die Durchführung und/oder des zweiten Dichtrings an das Kabel/den Schlauch ermöglicht werden.

### Ausführungsbeispiel

Drei Ausführungsbeispiele der Erfindung sind in den Zeichnungen dargestellt und werden im Folgenden näher erläutert. Es zeigen:
- Fig. 1: eine Schnittdarstellung einer erfindungsgemäßen Kabelabdichtung im geöffneten Zustand;
- Fig. 2: eine Schnittdarstellung der erfindungsgemäßen Kabelabdichtung im geschlossenen Zustand;
- Fig. 3: eine Schnittdarstellung einer zweiten erfindungsgemäßen Kabelabdichtung im geschlossenen Zustand; und
- Fig. 4: eine Schnittdarstellung einer weiteren erfindungsgemäßen Kabelabdichtung im geschlossenen Zustand.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

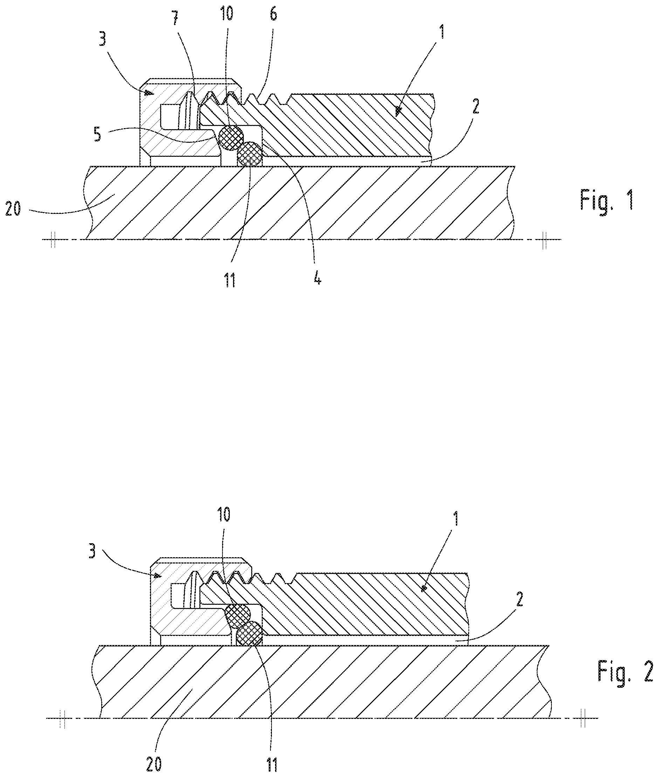

Die Figur 1 zeigt eine erfindungsgemäße Kabelabdichtung in einer Schnittdarstellung. Dabei ist im unteren Bereich der Figur 1 ein Kabel 20 gezeigt, welches in einer Durchführung 2 eines Gehäuses 1 aufgenommen ist. Am linken Ende der Durchführung 2 ist am Gehäuse 1 ein Außengewinde 6 ausgebildet. Auf dem Außengewinde 6 ist ein Druckelement 3 mit einem korrespondierenden Innengewinde 7 aufgeschraubt. Das Gehäuse 1 bildet am linken Ende der Durchführung 2 eine erste Druckfläche 4 aus. Der ersten Druckfläche 4 liegt eine zweite Druckfläche 5 gegenüber. Die zweite Druckfläche 5 ist dabei am Druckelement 3 ausgebildet. Durch Auf-/Abschrauben des Druckelements 3 vom Gehäuse 1 kann der Abstand zwischen der ersten Druckfläche 4 und der zweiten Druckfläche 5, welcher einen Druckbereich bildet, reguliert werden.

Im Druckbereich zwischen der ersten Druckfläche 4 und der zweiten Druckfläche 5 sind erfindungsgemäß zwei Dichtringe 10, 11 angeordnet. Dabei ist der erste Dichtring 10 von größerem Durchmesser als der zweite Dichtring 11.

Der zweite Dichtring 11 ist so dimensioniert, dass sein Innendurchmesser kleiner als der Durchmesser der Durchführung 2 ist. Der zweite Dichtring 11 sitzt zweckmäßig mit leichter Spannung auf dem abzudichtenden Kabel 20.

Der erste Dichtring 10 ist mit einem Innendurchmesser versehen, welcher den Außendurchmesser des zweiten Dichtrings 11 nicht überschreitet. So kann eine Abdichtung zwischen dem ersten Dichtring 10 und dem zweiten Dichtring 11 gewährleistet werden.

In der speziellen, dargestellten Ausführungsform ist die zweite Druckfläche 5 schief ausgebildet, was eine bessere Abdichtung des ersten Dichtrings 10 ermöglicht.

Im dargestellten Zustand ist das Druckelement 3 leicht aufgeschraubt, so dass keine Kraft von den Druckflächen 4, 5 auf die Dichtringe 10, 11 ausgeübt wird und die Verschraubung geöffnet und undicht ist. Eine geschlossene Kabelabdichtung ist in der Figur 2 gezeigt.

Die Figur 2 zeigt die Kabelabdichtung aus Figur 1 wobei hier das Druckelement 3 weiter auf das Gehäuse 1 aufgeschraubt ist. Dabei werden der erste Dichtring 10 und der zweite Dichtring 11 zwischen den Dichtflächen 4, 5 zusammengedrückt.

Durch die unterschiedlichen Durchmesser der Dichtringe 10, 11 lenken diese sich über ihre Außenflächen so ab, dass der größere, erste Dichtring 10 radial nach abgelenkt wird und der kleinere, zweite Dichtring 11 radial nach innen abgelenkt wird. Eine Abdichtung zwischen Dichtringen 10, 11, Kabel 20, Gehäuse 1 und Druckelement 3 wird so erzeugt. Da die Dichtringe 10, 11 auf Grund ihrer Elastizität sich verformen wird an den Kontaktstellen eine größere Dichtfläche erzeugt.

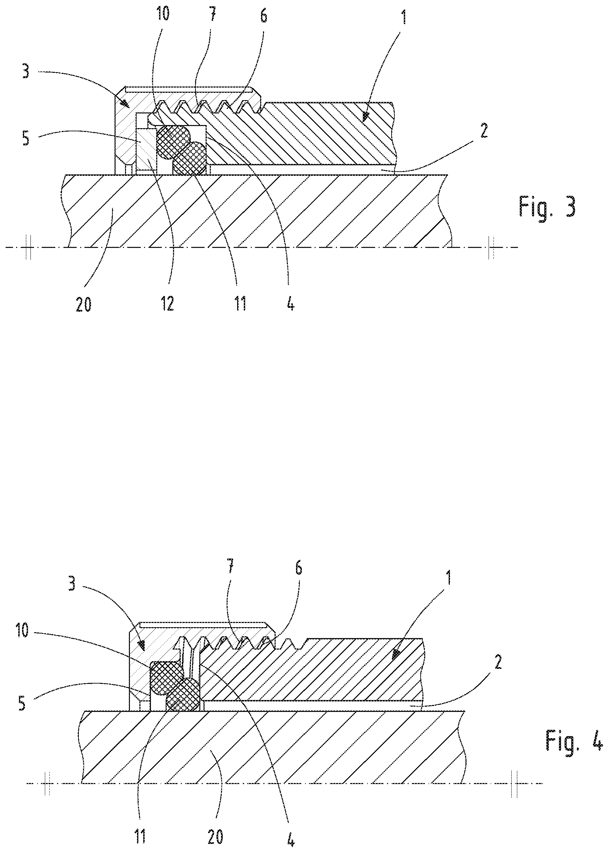

In der Figur 3 ist eine zweite, erfindungsgemäße Kabelabdichtung im Schnitt dargestellt. In dieser speziellen Ausführung ist zwischen der zweiten Druckfläche 5 und dem ersten Dichtring 10 ein Entkopplungsmittel 12 angeordnet.

Das Entkopplungsmittel 12 ist dafür vorgesehen, nur die axiale Kraft vom Druckelement 3 auf die Dichtringe 10, 11 zu übertragen. Das Entkopplungsmittel 12 ist verdrehbar zum Druckelement 3 angeordnet, wodurch kein Moment vom Druckelement 3 auf die Dichtringe 10, 11 übertragen werden kann, wenn dieses auf das Gehäuse 1 aufgeschraubt wird. Das Entkopplungsmittel 12 ist vom Material so zu wählen, dass zwischen dem Druckelement 3 und dem Entkopplungsmittel 12 eine möglichst geringe Reibung erzeugt wird.

Eine weitere erfindungsgemäße Kabelabdichtung ist in der Figur 4 ebenfalls in einer Schnittdarstellung gezeigt. Bei der gezeigten Kabelabdichtung ist der Druckbereich am Ende der Durchführung 2 lediglich an einer Seite vom Gehäuse 1 umgeben. In den Ausführungsbeispielen aus den Figuren 1 bis 3 ist am Gehäuse 1 an der Innenseite der Durchführung 2 eine Stufe eingeformt, welche die erste Druckfläche 4 und den Druckbereich zur Aufnahme der Dichtringe 10, 11 bildet.

In diesem Ausführungsbeispiel ist der Druckbereich zweiseitig vom Druckelement 3 umgeben und nur an einer Seite von der ersten Druckfläche 4 des Gehäuses 1. Die vierte Seite ist jeweils durch das abzudichtende Kabel 20 gebildet.

Durch diese Anordnung eines Druckelements 3 an einer Durchführung 2 eines Gehäuses 1 kann zur Abdichtung auf standardisierte Dichtringe 10, 11 - sogenannte O-Ringe - zurückgegriffen werden, ohne spezielle Dichtringe anfertigen zu müssen. Zudem ermöglicht die Anordnung von zwei größenunterschiedlichen Dichtringen es verschiedene Kabel- oder Schlauchdurchmesser abzudichten ohne unterschiedliche Dichtelementgrößen vorrätig halten zu müssen.

## Patentansprüche

1. Dichtung für Kabel und Schläuche an einem Gehäuse (1), bestehend aus einer Durchführung (2) in dem Gehäuse (1) und einem Druckelement (3),
wobei das Druckelement (3) an einem Ende der Durchführung (2) auf das Gehäuse (1) aufschraubbar oder in das Gehäuse (1) einschraubbar ist,
wobei an der Durchführung (2) eine erste Druckfläche (4) ausgebildet ist und am Druckelement (3) eine gegenüberliegende, zweite Druckfläche (5) ausgebildet ist,
wobei zwischen der ersten Druckfläche (4) und der zweiten Druckfläche (5) ein Druckbereich ausgebildet ist,
wobei zwischen der ersten Druckfläche (4) und der zweiten Druckfläche (5) ein erster Dichtring (10) und ein zweiter Dichtring (11) im Druckbereich angeordnet sind, wobei die Dichtringe (10, 11) als Rotationstorus ausgebildet sind, **dadurch gekennzeichnet, dass** ein Abdichtung zwischen den Dichtringen (10, 11) erfolgt, indem der erste Dichtring (10) und der zweite Dichtring (11) über die erste Druckfläche (4) und die zweite Druckfläche (5) aneinandergedrückt werden, wenn das Druckelement (3) auf das Gehäuse (1) aufgeschraubt oder in das Gehäuse (1) eingeschraubt wird, wobei der erste Dichtring (10) einen größeren Innendurchmesser aufweist, als der zweite Dichtring (11), wobei
der Innendurchmesser des ersten Dichtrings (10) kleiner ist als der Außendurchmesser des zweiten Dichtrings (11), wobei
der Außendurchmesser des ersten Dichtrings (10) größer ist als der Außendurchmesser des zweiten Dichtrings (11).

2. Dichtung nach vorstehendem Anspruch,
**dadurch gekennzeichnet, dass**
der Innendurchmesser des zweiten Dichtrings (11) kleiner ist als der Durchmesser der Durchführung (2).

3. Dichtung nach einem der vorstehenden Ansprüche,
**dadurch gekennzeichnet, dass**
die Dichtringe (10, 11) aus einem elastischen Polymer bestehen.

4. Dichtung nach einem der vorstehenden Ansprüche,
**dadurch gekennzeichnet, dass**
das Druckelement (3) als Ring ausgebildet ist.

5. Dichtung nach einem der vorstehenden Ansprüche,
**dadurch gekennzeichnet, dass**
an der zweiten Druckfläche (5) ein Entkopplungsmittel (12) angeordnet ist, welches drehbar zur zweiten Druckfläche (5) ist.

6. Dichtung nach vorstehendem Anspruch,
**dadurch gekennzeichnet, dass**
das Entkopplungsmittel (12) als flacher Ring ausgebildet ist.

## Claims

1. Sealing arrangement for sealing cables and hoses to a housing (1), comprising a feedthrough (2) in the housing (1) and a pressure element (3),
wherein the pressure element (3) can be screwed onto the housing (1) or can be screwed into the housing (1) at one end of the feedthrough (2),
wherein a first pressure surface (4) is embodied on the feedthrough (2) and an opposite-lying, second pressure surface (5) is embodied on the pressure element (3),
wherein a pressure region is embodied between the first pressure surface (4) and the second pressure surface (5),
wherein a first sealing ring (10) and a second sealing ring (11) are arranged between the first pressure surface (4) and the second pressure surface (5) in the pressure region,
wherein the sealing rings (10, 11) are embodied as a rotation torus, **characterized in that** a sealing arrangement is provided between the sealing rings (10, 11) by virtue of the first sealing ring (10) and the second sealing ring (11) being pressed onto one another by way of the first pressure surface (4) and the second pressure surface (5) when the pressure element (3) is screwed onto the housing (1) or screwed into the housing (1), wherein the first sealing ring (10) comprises a larger inner diameter than the second sealing ring (11),
wherein the inner diameter of the first sealing ring (10) is smaller than the outer diameter of the second sealing ring (11), wherein the outer diameter of the first sealing ring (10) is larger than the outer diameter of the second sealing ring (11).

2. Sealing arrangement according to the preceding claim,
**characterized in that**
the inner diameter of the second sealing ring (11) is smaller than the diameter of the feedthrough (2).

3. Sealing arrangement according to either of the preceding claims,
**characterized in that**
the sealing rings (10, 11) are embodied from an elastic polymer.

4. Sealing arrangement according to any one of the preceding claims,
**characterized in that**
the pressure element (3) is embodied as a ring.

5. Sealing arrangement according to any one of the preceding claims,
**characterized in that**
a decoupling means (12) is arranged on the second pressure surface (5) and said decoupling means (12) can rotate with respect to the second pressure surface (5).

6. Sealing arrangement according to the preceding claim,
**characterized in that**
the decoupling means (12) is embodied as a planar ring.

## Revendications

1. Garniture d'étanchéité destinée à des câbles et des tuyaux au niveau d'un boîtier (1), la garniture d'étanchéité comprenant un passage traversant (2) ménagé dans le boîtier (1) et un élément de pression (3),
l'élément de pression (3) pouvant être vissé sur le boîtier (1) ou dans le boîtier (1) à une extrémité du passage traversant (2),
une première surface de pression (4) étant formée au niveau de la traversée (2) et une deuxième surface de pression opposée (5) étant formée au niveau de l'élément de pression (3),
une région de pression étant formée entre la première surface de pression (4) et la deuxième surface de pression (5),
une première bague d'étanchéité (10) et une deuxième bague d'étanchéité (11) étant disposées entre la première surface de pression (4) et la deuxième surface de pression (5), les bagues d'étanchéité (10, 11) étant réalisées sous la forme d'un tore de révolution, **caractérisée en ce que**
une étanchéité est réalisée entre les bagues d'étanchéité (10, 11) du fait que la première bague d'étanchéité (10) et la deuxième bague d'étanchéité (11) sont pressées l'une contre l'autre par le biais de la première surface de pression (4) et de la deuxième surface de pression (5) lorsque l'élément de pression (3) est vissé sur le boîtier (1) ou dans le boîtier (1), la première bague d'étanchéité (10) ayant un diamètre intérieur supérieur à celui de la deuxième bague d'étanchéité (11), le diamètre interne de la première bague d'étanchéité (10) étant inférieur au diamètre extérieur de la deuxième bague d'étanchéité (11), le diamètre extérieur de la première bague d'étanchéité (10) étant supérieur au diamètre extérieur de la deuxième bague d'étanchéité (11).

2. Garniture d'étanchéité selon la revendication précédente,
**caractérisée en ce que**
le diamètre intérieur de la deuxième bague d'étanchéité (11) est inférieur au diamètre du passage traversant (2) .

3. Garniture d'étanchéité selon l'une des revendications précédentes,
**caractérisée en ce que**
les bagues d'étanchéité (10, 11) sont en un polymère élastique.

4. Garniture d'étanchéité selon l'une des revendications précédentes,
**caractérisée en ce que**
l'élément de pression (3) est conçu sous la forme d'une bague.

5. Garniture d'étanchéité selon l'une des revendications précédentes,
**caractérisée en ce que**
un moyen de découplage (12), pouvant tourner par rapport à la deuxième surface de pression (5), est disposé sur la deuxième surface de pression (5).

6. Garniture d'étanchéité selon la revendication précédente,
**caractérisée en ce que**
le moyen de découplage (12) est conçu sous la forme d'une bague plate.
